# FASCICULE DE BREVET EUROPEEN

(11) **EP 4 011 664 B1**
(45) Date de publication et mention de la délivrance du brevet: **15.03.2023**
(21) Numéro de dépôt: 21213173.4
(22) Date de dépôt: 08.12.2021
(51) Int. Cl.: B60J 5/04, B61D 49/00, B62D 25/10

(54) **VÉHICULE TERRESTRE AVEC TRAPPE TECHNIQUE**
LANDFAHRZEUG MIT TECHNISCHER KLAPPE
LAND VEHICLE WITH INSPECTION HATCH

(30) Priorité: 11.12.2020 FR 2013105
(43) Date de publication de la demande: 15.06.2022
(73) Titulaire: SpeedInnov, 75008 Paris (FR)
(72) Inventeur: CHARBONNEL, Fabrice, 17290 THAIRE (FR); MONTIGAUD, Philippe, 17000 LA ROCHELLE (FR); PERIN, Daniel, 17220 SAINT-ROGATIEN (FR)
(74) Mandataire: Lavoix

(56) Documents cités:
- DE-B3-102015 218 872
- US-A- 5 192 108
- US-A1- 2009 313 904
- US-A1- 2013 216 344

## Description

La présente invention concerne un véhicule terrestre, du type comportant : une caisse, ladite caisse comprenant : une paroi externe, sensiblement verticale, ladite paroi externe s'étendant dans une direction longitudinale horizontale ; un compartiment technique ouvrant sur ladite paroi externe ; et au moins un dispositif de fermeture apte à fermer de manière réversible le compartiment technique, ledit dispositif de fermeture étant mobile entre une configuration ouverte et une configuration fermée. Le document US 2013/216344 A1 divulgue un véhicule avec un dispositif de fermeture apte à fermer de manière réversible un compartiment technique.

L'invention s'applique particulièrement aux véhicules ferroviaires, de type trains ou trams, mais également aux véhicules routiers de type autobus.

Les véhicules ferroviaires sont couramment munis de trappes donnant accès à des compartiments techniques. De telles trappes sont formées par des ouvertures dans les parois du véhicule, lesdites ouvertures étant fermées par des portes ou des volets.

De manière connue, les volets sont articulés aux parois du véhicule selon un axe horizontal. En cas d'ouverture intempestive d'un volet pendant le déplacement du véhicule, l'encombrement généré par ledit volet peut dépasser un gabarit prévu par les normes de circulation dudit véhicule. Un tel dépassement peut provoquer des accidents, notamment avec des personnes se trouvant sur un quai de gare.

La présente invention a pour but de limiter les risques d'accidents liés aux dépassements de gabarit, tout en permettant un accès simple et rapide aux compartiments techniques du véhicule.

A cet effet, l'invention a pour objet un véhicule terrestre du type précité, dans lequel : le dispositif de fermeture comporte : un premier et un deuxième volets, alignés selon la direction longitudinale ; chaque volet étant mobile en rotation par rapport à la paroi externe de la caisse, selon un axe sensiblement vertical ; et un élément central, assemblé à la caisse, ledit élément central étant disposé entre le premier et le deuxième volets selon la direction longitudinale ; dans la configuration fermée du dispositif de fermeture, chacun des premier et deuxième volets s'étend dans la direction longitudinale, une première et une seconde extrémités de chacun desdits volets selon ladite direction longitudinale étant au contact respectivement de la paroi externe de la caisse et de l'élément central, lesdits premier et deuxième volets et l'élément central obturant ainsi le compartiment technique ; et dans la configuration ouverte du dispositif de fermeture, chacun des premier et deuxième volets est apte à être replié contre la paroi externe ou contre l'élément central, de sorte à donner accès au compartiment technique.

Suivant d'autres aspects avantageux de l'invention, le véhicule terrestre comporte l'une ou plusieurs des caractéristiques suivantes, prises isolément ou suivant toutes les combinaisons techniquement possibles :
- l'élément central du dispositif de fermeture est fixé de manière amovible à la paroi externe de la caisse ;
- l'élément central du dispositif de fermeture est articulé à la paroi externe selon un axe préférentiellement horizontal ;
- au moins l'un des premier et deuxième volets est articulé à l'élément central ;
- l'au moins un volet articulé à l'élément central comporte un élément de fixation amovible à la paroi externe de la caisse ;
- au moins l'un des premier et deuxième volets est articulé à la paroi externe de la caisse ;
- l'au moins un volet articulé à la paroi externe comporte un élément de fixation amovible à l'élément central ;
- l'élément central est un panneau ;
- l'élément central est une poutre ;
- au moins l'un des premier ou deuxième volets et/ou l'élément central comporte des orifices d'aération du compartiment technique.

L'invention sera mieux comprise à la lecture de la description qui va suivre, donnée uniquement à titre d'exemple non limitatif et faite en se référant aux dessins sur lesquels :
[Fig 1] la figure 1 est une vue schématique latérale d'un véhicule terrestre selon un premier mode de réalisation de l'invention, dans une première configuration ; et
[Fig 2] la figure 2 est une vue schématique latérale d'un véhicule terrestre selon un deuxième mode de réalisation de l'invention, dans une deuxième configuration.

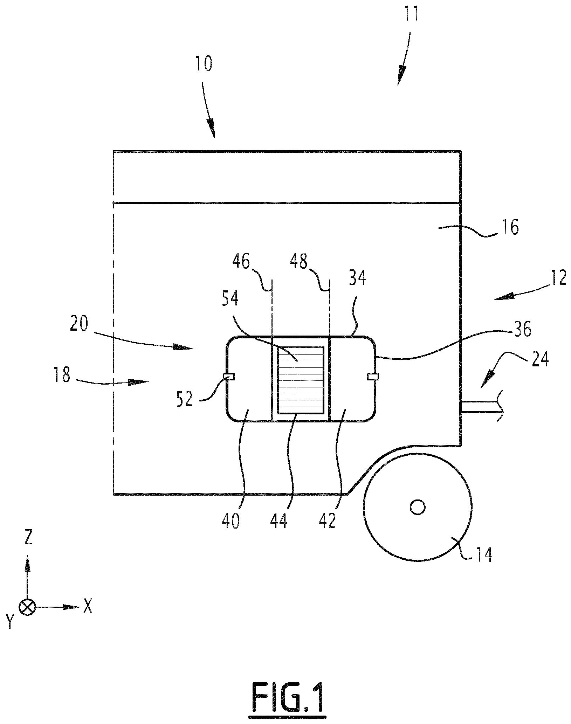

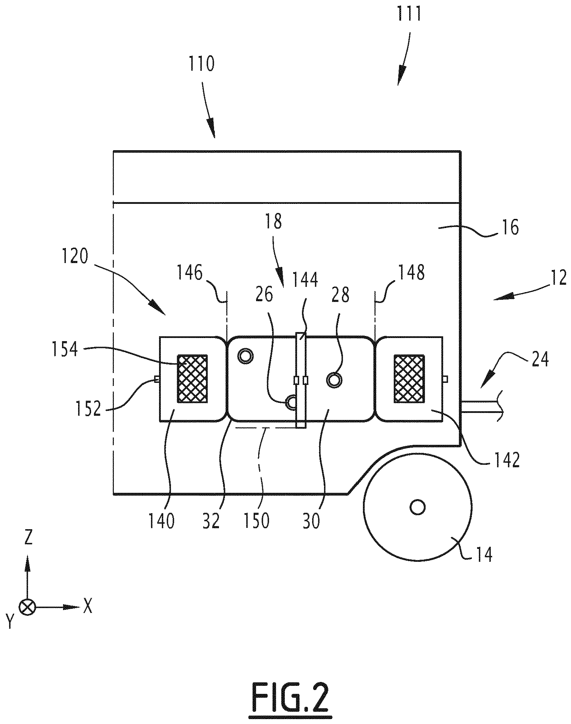

Les figures 1 et 2 représentent des vues de détail, respectivement d'un véhicule terrestre 10 selon un premier mode de réalisation de l'invention ; et d'un véhicule terrestre 110 selon un deuxième mode de réalisation de l'invention.

Dans le mode de réalisation représenté, le véhicule 10, 110 terrestre est une voiture pour véhicule ferroviaire 11, 111, de type train ou tram. Un tel véhicule ferroviaire 11, 111 comporte par exemple plusieurs voitures 10, 110 analogues, reliées les unes aux autres.

En variante non représenté, le véhicule terrestre 10, 110 est un véhicule routier de type autobus.

Dans la suite de la description, les véhicules 10 et 110 seront décrits simultanément, les éléments communs étant désignés par les mêmes numéros de référence.

Le véhicule 10, 110 terrestre comprend une caisse 12 et une pluralité de roues 14 mobiles en rotation par rapport à la caisse.

On considère une base orthonormée (X, Y, Z) associée à la caisse 12, la direction Z représentant la verticale. La caisse s'étend selon la direction horizontale X, dite direction longitudinale, correspondant à une direction de déplacement du véhicule 10, 110 terrestre.

La caisse 12 comprend notamment : une paroi latérale 16 ; un compartiment technique 18 ; et un dispositif 20, 120 de fermeture dudit compartiment technique.

La paroi latérale 16 s'étend selon la direction longitudinale X. De préférence, ladite paroi latérale est sensiblement verticale.

Le compartiment technique 18 est par exemple destiné à l'entretien d'au moins un circuit hydraulique 24 du véhicule 10, 110. Le compartiment technique 18 renferme par exemple une ou plusieurs vannes 26, 28 de vidange et/ou de rinçage.

Dans le cas où le véhicule 10, 110 terrestre est une voiture de véhicule ferroviaire 11, 111 comprenant plusieurs voitures analogues, le circuit hydraulique 24 s'étend de préférence sur plusieurs voitures dudit véhicule ferroviaire 11, 111.

Le compartiment technique 18 est disposé à l'intérieur de la caisse 12 et comporte une ouverture 30 (figure 2) débouchant sur la paroi latérale 16.

Dans le mode de réalisation, l'ouverture comporte un bord 32 (figure 2) sensiblement rectangulaire, avec des côtés horizontaux 34 et des côtés verticaux 36 (figure 1).

Le dispositif de fermeture 20, 120 est apte à fermer de manière réversible le compartiment technique 18. Plus précisément, le dispositif de fermeture 20, 120 est mobile entre une configuration fermée, visible sur la figure 1, et une configuration ouverte visible sur la figure 2.

Dans la configuration fermée, le dispositif de fermeture 20, 120 obture l'ouverture 30 du compartiment technique 18. Dans la configuration ouverte, le dispositif de fermeture 20, 120 donne accès à l'intérieur dudit compartiment technique 18, notamment aux vannes 26, 28.

Le dispositif de fermeture comporte : un premier 40, 140 et un deuxième 42, 142 volets ; et un élément central 44, 144.

De préférence, chacun des premier volet 40, 140, deuxième volet 42, 142 et élément central 44, 144 présente une hauteur selon Z sensiblement égale à la hauteur des côtés verticaux 36 du bord 32.

Les premier 40, 140 et deuxième 42, 142 volets sont alignés selon la direction longitudinale X. Comme il sera détaillé ci-après, le premier volet 40, 140 est mobile en rotation par rapport à la caisse 12, selon un premier axe 46, 146 sensiblement vertical. De même, comme il sera détaillé ci-après, le deuxième volet 42, 142 est mobile en rotation par rapport à la caisse 12, selon un deuxième axe 48, 148 sensiblement vertical.

L'élément central 44, 144 est disposé entre les premier 40, 140 et deuxième 42, 142 volets selon la direction longitudinale X.

Ledit élément central est assemblé au bord 32 de l'ouverture 30 du compartiment technique 18. Plus précisément, l'élément central 44, 144 est assemblé aux côtés horizontaux 34 du bord 32.

Selon un premier mode de réalisation, tel que représenté sur la figure 1, l'élément central 44 est un panneau rectangulaire. Selon un deuxième mode de réalisation, tel que représenté sur la figure 2, l'élément central 144 est une poutre disposée sensiblement verticalement.

Selon le premier mode de réalisation, tel que représenté sur la figure 1, l'élément central 44 est fixé à chacun des côtés horizontaux 34 du bord 32, avec des fixations amovibles de type vis.

Selon le deuxième mode de réalisation, tel que représenté sur la figure 2, une première extrémité de l'élément central 144 est articulée à la paroi latérale 16 de la caisse 12, selon un troisième axe de rotation 150 parallèle à X. Une deuxième extrémité dudit élément central 144 est fixée à la paroi latérale 16 avec des fixations amovibles de type vis. De préférence, le troisième axe de rotation 150 est disposé sous l'ouverture 30.

Selon le premier mode de réalisation, au moins l'un des premier 40 et deuxième 42 volets est articulé à l'élément central 44. Dans le mode de réalisation de la figure 1, chacun des premier 40 et deuxième 42 volets est articulé à l'élément central 44, par exemple à l'aide de charnières matérialisant les premier 46 et deuxième 48 axes de rotation. En outre, chacun des volets 40, 42 est équipé d'un élément 52 de fixation amovible au bord 32 de l'ouverture 30. Ledit élément de fixation 52 est par exemple un loquet.

Selon le deuxième mode de réalisation, au moins l'un des premier 140 et deuxième 142 volets est articulé au bord 32 de l'ouverture 30. Dans le mode de réalisation de la figure 2, chacun des premier 140 et deuxième 142 volets est articulé au bord 32, par exemple à l'aide de charnières matérialisant les premier 146 et deuxième 148 axes de rotation. Chacun desdits premier 146 et deuxième 148 axes est sensiblement aligné à un côté vertical 36 du bord 32.

En outre, chacun des volets 140, 142 est équipé d'un élément 152 de fixation amovible à l'élément central 144. Ledit élément de fixation 152 est par exemple un loquet.

En variante non représentée, l'un des premier et deuxième volets est articulé à l'élément central ; et l'autre des premier et deuxième volets est articulé à la paroi latérale de la caisse.

De préférence, au moins l'un des premier 40, 140 et deuxième 42, 142 volets est mobile autour de son axe de rotation 46, 146, 48, 148 avec une amplitude d'environ 180°.

Plus précisément, dans le mode de réalisation de la figure 2, chacun des volets 140, 142 peut être replié au contact de la paroi latérale 16 en configuration ouverte du dispositif de fermeture 120.

Dans le mode de réalisation de la figure 1, en configuration ouverte du dispositif de fermeture 20, au moins l'un des volets 40, 42 peut être replié contre l'élément central 44. Dans le mode de réalisation représenté, la largeur selon X de l'élément central 44 ne permet de rabattre qu'un seul volet 40, 42 à la fois sur ledit élément central. En variante non représentée, avec un élément central plus large, les deux volets 40, 42 peuvent être rabattus simultanément sur ledit élément central.

De manière optionnelle, le dispositif de fermeture 20, 120, comporte des orifices 54, 154 d'aération permettant de ventiler le compartiment technique 18 en configuration fermée dudit dispositif. Les orifices 54, 154 d'aération sont par exemple formés par une grille ou par des persiennes.

Les orifices 54, 154 d'aération sont portés par au moins l'un des premier 40, 140 ou deuxième 42, 142 volets et/ou par l'élément central 44, 144. Dans le mode de réalisation de la figure 1, l'élément central comporte des orifices 54 d'aération de type persiennes. Dans le mode de réalisation de la figure 2, chacun des volets 140, 142 comporte des orifices 154 d'aération de type grille.

Un procédé de fonctionnement du véhicule terrestre 10, 110 et du dispositif de fermeture 20, 120 va maintenant être décrit. Lors d'un déplacement du véhicule 10, 110, le dispositif de fermeture 20, 120 est en configuration fermée et les éléments de fixation 52, 152 maintiennent les volets 40, 140, 42, 142 au contact du bord de l'ouverture 30 ou au contact de l'élément central 44, 144.

En cas de défaillance d'un loquet 52, 152, un volet 40, 140, 42, 142 qui s'ouvre inopinément est rabattu contre la paroi latérale 16 ou contre l'élément central 44, 144. L'encombrement autour du véhicule terrestre 10, 110 selon une direction transversale Y reste donc contenu dans un gabarit prévu par les normes de circulation dudit véhicule.

Afin d'accéder aux vannes 26, 28 pour entretenir le circuit hydraulique 24, un opérateur déverrouille les loquets 52, 152 afin d'ouvrir le premier 40, 140 et/ou le deuxième 42, 142 volets.

Pour accéder à une vanne 26 éventuellement obstruée par l'élément central 44, 144, l'opérateur peut également ôter les fixations amovibles assemblant ledit élément central à la paroi latérale 16. Dans le cas du mode de réalisation de la figure 2, l'opérateur enlève les vis fixant la deuxième extrémité de la poutre 144 au bord 32 de l'ouverture 30. Il fait ensuite pivoter ladite poutre 144 autour du troisième axe de rotation 150, afin d'accéder à la vanne 26.

Les opérations d'entretien effectuées, l'opérateur revisse l'élément central 44, 144 au bord 32 de l'ouverture 30. Ensuite, l'opérateur verrouille à nouveau les loquets 52, 152, pour remettre le dispositif de fermeture 20, 120 en configuration fermée.

Le véhicule terrestre 10, 110 tel que décrit ci-dessus permet un accès facilité aux compartiments techniques, tout en évitant un dépassement de gabarit en cas d'ouverture intempestive d'un volet, notamment en cours de déplacement du véhicule. Les volets sont simplement articulés à l'aide de charnières, sans nécessiter de vérins d'ouverture.

## Revendications

1. Véhicule (10, 110) terrestre comprenant une caisse (12), ladite caisse comprenant : une paroi externe (16), sensiblement verticale, ladite paroi externe s'étendant dans une direction longitudinale (X) horizontale ; un compartiment technique (18) ouvrant sur ladite paroi externe ; et au moins un dispositif (20, 120) de fermeture apte à fermer de manière réversible le compartiment technique, ledit dispositif de fermeture étant mobile entre une configuration ouverte et une configuration fermée ;
le dispositif de fermeture comportant :
- un premier (40, 140) et un deuxième (42, 142) volets, alignés selon la direction longitudinale ; chaque volet étant mobile en rotation par rapport à la paroi externe de la caisse, selon un axe (46, 146, 48, 148) sensiblement vertical ; et
- un élément central (44, 144), assemblé à la caisse, ledit élément central étant disposé entre le premier et le deuxième volets selon la direction longitudinale ;
dans la configuration fermée du dispositif de fermeture, chacun des premier et deuxième volets s'étendant dans la direction longitudinale, une première et une seconde extrémités de chacun desdits volets selon ladite direction longitudinale étant au contact respectivement de la paroi externe (16) de la caisse et de l'élément central (44, 144), lesdits premier et deuxième volets et l'élément central obturant ainsi le compartiment technique ;
dans la configuration ouverte du dispositif de fermeture, chacun des premier et deuxième volets étant apte à être replié contre la paroi externe (16) ou contre l'élément central, de sorte à donner accès au compartiment technique ;
l'élément central étant fixé de manière amovible à la paroi externe (16) de la caisse ;
le véhicule étant **caractérisé en ce que** l'élément central (144) du dispositif de fermeture est articulé à la paroi externe (16) selon un axe (150) préférentiellement horizontal.

2. Véhicule terrestre (10) selon la revendication 1, dans lequel au moins l'un des premier (40) et deuxième (42) volets est articulé à l'élément central (44).

3. Véhicule terrestre (10) selon la revendication 2, dans lequel l'au moins un volet (40, 42) articulé à l'élément central (44) comporte un élément (52) de fixation amovible à la paroi externe (16) de la caisse.

4. Véhicule terrestre (110) selon l'une des revendications précédentes, dans lequel au moins l'un des premier (140) et deuxième (142) volets est articulé à la paroi externe (16) de la caisse.

5. Véhicule terrestre (110) selon la revendication 4, dans lequel l'au moins un volet (140, 142) articulé à la paroi externe (16) comporte un élément (152) de fixation amovible à l'élément central (144).

6. Véhicule terrestre (10) selon l'une des revendications précédentes, dans lequel l'élément central (44) est un panneau.

7. Véhicule terrestre (10) selon l'une des revendications 1 à 5, dans lequel l'élément central (144) est une poutre.

8. Véhicule terrestre (10, 110) selon l'une des revendications précédentes, dans lequel au moins l'un des premier ou deuxième volets (140, 142) et/ou l'élément central (44) comporte des orifices (54, 154) d'aération du compartiment technique (18).

## Patentansprüche

1. Landfahrzeug (10, 110), umfassend einen Wagenkasten (12), der Wagenkasten umfassend: eine im Wesentlichen vertikale Außenwand (16), wobei sich die Außenwand in einer horizontalen Längsrichtung (X) erstreckt; ein Technikfach (18), das sich zu der Außenwand öffnet; und mindestens eine Verschlussvorrichtung (20, 120), die geeignet ist, um das Technikfach reversibel zu schließen, wobei die Verschlussvorrichtung zwischen einer offenen und einer geschlossenen Konfiguration beweglich ist;
die Schließvorrichtung umfassend:
- eine erste (40, 140) und eine zweite (42, 142) Klappe, die in der Längsrichtung ausgerichtet sind; wobei jede Klappe in Bezug auf die Außenwand des Wagenkastens um eine im Wesentlichen vertikale Achse (46, 146, 48, 148) drehbar ist; und
- ein mittleres Element (44, 144), das an dem Wagenkasten angebaut ist, wobei das mittlere Element zwischen der ersten und der zweiten Klappe in der Längsrichtung angeordnet ist;
wobei sich in der geschlossenen Konfiguration der Verschlussvorrichtung jede von der ersten und der zweiten Klappe in Längsrichtung erstreckt, wobei ein erstes und ein zweites Ende von jeder der Klappen in der Längsrichtung die Außenwand (16) des Wagenkastens bzw. das mittlere Element (44, 144) berührt, wodurch die erste und die zweite Klappe und das mittlere Element das Technikfach verschließen;
in der offenen Konfiguration der Verschlussvorrichtung jede von der ersten und der zweiten Klappe geeignet ist, um gegen die Außenwand (16) oder gegen das mittlere Element gefaltet zu werden, um Zugang zu dem Technikfach zu gewähren;
wobei das mittlere Element lösbar an der Außenwand (16) des Wagenkastens befestigt ist;
wobei das Fahrzeug **dadurch gekennzeichnet ist, dass** das mittlere Element (144) der Verschlussvorrichtung entlang einer vorzugsweise horizontalen Achse (150) an der Außenwand (16) angelenkt ist.

2. Landfahrzeug (10) nach Anspruch 1, wobei mindestens eine von der ersten (40) und der zweiten (42) Klappe gelenkig mit dem mittleren Element (44) verbunden ist.

3. Landfahrzeug (10) nach Anspruch 2, wobei die mindestens eine Klappe (40, 42), die an dem mittleren Element (44) angelenkt ist, ein lösbares Befestigungselement (52) an der Außenwand (16) des Wagenkastens aufweist.

4. Landfahrzeug (110) nach einem der vorherigen Ansprüche, wobei mindestens eine von der ersten (140) und der zweiten (142) Klappe an der Außenwand (16) des Wagenkastens angelenkt ist.

5. Landfahrzeug (110) nach Anspruch 4, wobei die mindestens eine Klappe (140, 142), die an der Außenwand (16) angelenkt ist, ein lösbares Befestigungselement (152) an dem mittleren Element (144) aufweist.

6. Landfahrzeug (10) nach einem der vorherigen Ansprüche, wobei das mittlere Element (44) eine Platte ist.

7. Landfahrzeug (10) nach einem der Ansprüche 1 bis 5, wobei das mittlere Element (144) ein Balken ist.

8. Landfahrzeug (10, 110) nach einem der vorherigen Ansprüche, wobei mindestens eine von der ersten oder der zweiten Klappe (140, 142) und/oder das mittlere Element (44) Öffnungen (54, 154) zur Belüftung des Technikfachs (18) aufweist.

## Claims

1. A land vehicle (10, 110) comprising a body (12), said body comprising: a substantially vertical outer wall (16), said outer wall extending in a horizontal longitudinal direction (X); a technical compartment (18) opening onto said outer wall; and at least one closing device (20, 120) capable of reversibly closing the technical compartment, said closing device being movable between an open configuration and a closed configuration;
the closing device comprising:
- a first (40, 140) and second (42, 142) flap, aligned in the longitudinal direction; both flaps being rotatable with respect to the outer wall of the body, along a substantially vertical axis (46, 146, 48, 148); and
- a central element (44, 144), connected to the body, said central element being disposed between the first and second flaps in the longitudinal direction;
in the closed configuration of the closing device, with both the first and second flaps extending in the longitudinal direction, a first and a second end of both of said flaps in said longitudinal direction being in contact with the outer wall (16) of the body and the central element (44, 144), respectively, said first and second flaps and the central element thus obstructing the technical compartment;
in the open configuration of the closing device, both the first and second flaps being capable of being folded against the outer wall (16) or against the central element, so as to give access to the technical compartment;
the central element being removably attached to the outer wall (16) of the body;
the vehicle being **characterised in that** the central element (144) of the closing device is hinged to the outer wall (16) along a preferably horizontal axis (150).

2. The land vehicle (10) according to claim 1, wherein at least one of the first (40) and second (42) flaps is hinged to the central element (44).

3. The land vehicle (10) according to claim 2, wherein the at least one flap (40, 42) hinged to the central element (44) has a member (52) for releasable fastening to the outer wall (16) of the body.

4. The land vehicle (110) according to any of the preceding claims, wherein at least one of the first (140) and second (142) flaps is hinged to the outer wall (16) of the body.

5. The land vehicle (110) according to claim 4, wherein the at least one flap (140, 142) hinged to the outer wall (16) has a member (152) for releasable fastening to the central element (144).

6. The land vehicle (10) according to any of the preceding claims, wherein the central element (44) is a panel.

7. The land vehicle (10) according to any of claims 1 to 5, wherein the central element (144) is a beam.

8. The land vehicle (10, 110) according to any of the preceding claims, wherein at least one of the first or second flaps (140, 142) and/or the central element (44) comprises air vents (54, 154) of the technical compartment (18).
